# EUROPÄISCHE PATENTSCHRIFT

(11) **EP 0 464 423 B1**
(45) Veröffentlichungstag und Bekanntmachung des Hinweises auf die Patenterteilung: **26.10.1994**
(21) Anmeldenummer: 91109755.8
(22) Anmeldetag: 14.06.1991
(51) Int. Cl.: H02J 3/14

(54) **Anordnung zum Steuern des Gesamtenergieverbrauches eines Elektrizitätsabnehmers**
Device for controlling the total energy-consumption of an electricity consumer
Dispositif pour commander la consommation totale d'énergie d'un récepteur de courant

(30) Priorität: 19.06.1990 DE 4019523
(43) Veröffentlichungstag der Anmeldung: 08.01.1992
(73) Patentinhaber: Decher, Dieter, D-21029 Hamburg (DE)
(72) Erfinder: Decher, Dieter, D-21029 Hamburg (DE)
(74) Vertreter: Richter, Werdermann & Gerbaulet

(56) Entgegenhaltungen:
- EP-A- 0 003 010
- WO-A-90/06612
- US-A- 4 059 747

## Beschreibung

Die Erfindung geht aus von einer Anordnung zum Steuern des Gesamt-Energieverbrauches (EV) eines Elektrizitäts-Abnehmers, bei der in mehreren Stromkreisen zu je einem Verbraucher-Gerät außer einem Überlastungsschalter sowohl je ein steuerbarer Schalter als auch je ein Stromfluß-Signal liefernder Stromflußfühler eingeschaltet sind und bei der die Stromfluß-Signale, ggf. über Zwischenstufen wie Verstärker, einer Verarbeitungseinheit (Computer) zugeführt werden, wobei, vorzugsweise aus den Stromflußsignalen, ein Summen-Signal gebildet wird und wobei an die Verarbeitungseinheit die steuerbaren Schalter angeschlossen sind derart, daß wenigstens einer der Schalter betätigt wird, wenn das Summensignal einen Grenzwert überschreitet oder wenn andere Abschaltkriterien vorliegen, wobei der Stromflußfühler, der steuerbare Schalter und der Überlastungsschalter zu einer als Sensor-Stellglied wirkenden Baueinheit zusammengefaßt sind, wie sie aus der DE 32 26 544 A1 bekannt ist.

Diese bekannte Anordnung betrifft ein System zur Steuerung des elektrischen Energieverbrauchs (Gesamt-Stromverbrauch), vorzugsweise in Haushalten, bei dem in jedem Stromkreis zu den Verbraucher-Geräten der Strom gemessen wird und die Zu- oder Abschaltung von Verbrauchern nach dem Vergleich der in einer Meßperiode bezogenen elektrischen Energie mit einem Grenzwert erfolgt. Die Stromfühler in den einzelnen Stromkreises werden dazu verwendet, um die Stromflußdauern in den einzelnen Stromkreisen zu ermitteln.

Weiter ist aus der DE 37 01 493 A1 eine Schaltungsanordnung zum Verteilen elektrischer Speiseleistung auf mehrere Verbraucher bekannt, wobei ein vorgegebener Grenzwert der Gesamtspeiseleistung eingehalten werden soll, der niedriger ist als die Summe der höchstmöglichen Einzelspeiseleistungen. Die Gesamtspeiseleistung wird durch Auswertung der Gesamt-Stromaufnahme aller Verbraucher ermittelt. Einzelne Verbraucher werden nicht zu- oder abgeschaltet, sondern bei Verbrauchern mit geringerer Bedeutung wird der Speisestrom reduziert.

Schließlich ist es aus der DE-A-15 88 439 bekannt, daß für den günstigsten Energiebezug die Energie mit konstanter Leistung bezogen werden muß. Dazu wird während der Meßperiode dauernd die zu- bzw. abzuschaltende Leistung ermittelt, und die Verteilung der elektrischen Energie wird durch eine Automatik optimal vorgenommen, wenn die gefahrene Leistung eines jeden Verbrauchers gemessen wird.

In Zukunft kann bei Änderung der Energieverteilung durch Einführung einer neuen BTO Elt auch für Haushalte und Gewerbebetriebe eine abnahmegerechte Energieabrechnung eingeführt werden. Die Bereitstellungsleistung der Elektrizitäts-Versorgungs-Unternehmen (EVU) soll dann nicht mehr anhand subjektiver Tarifaufnahmen ermittelt werden, sondern gleichzeitig mit dem Arbeitsverbrauch gemessen werden. Es soll dann eine optimale Abrechnung gegenüber dem Elektrizitätswerk erfolgen. Hierzu ist zu berücksichtigen, daß nach dem neuen Stromtarif die früher übliche, auf der Raumanzahl, Raumgröße und Verbraucherzahl basierende Grundgebühr bei Privathaushalten wegfällt und auch bei gewerblichen Abnehmern der Leistungspreis entfällt. In beiden Fällen wird eine jährliche Grundgebühr berechnet, die sich aus der Spitzenleistungsabnahme errechnet, und zwar wird dabei der Wert berücksichtigt, der z.B. als Maximum über 15 Minuten oder über 96 Stunden erreicht wurde.

Die neuen Stromzähler können einen Maximum-Wächter haben, der gleichzeitig mit einer Zeitschaltuhr gekoppelt ist. Pro Kilowatt soll dabei eine Grundgebühr von etwa DM 300,-- bis DM 400,-- in Rede stehen, so daß es sehr interessant ist, ob im Privathaushalt der Spitzenwert der Abnahme beispielsweise 4 kW oder 8 kW bei gleichzeitigem Betrieb aller Großverbraucher beträgt.

Die tatsächliche Abnahmeleistung ist somit ein wichtiger Kostenbestandteil, den der Kunde in jedem Augenblick nur in äußerster Disziplin beeinflussen kann. Größere gewerbliche Einrichtungen sind hierin heute schon überfordert. Das Ziel ist dabei, auch beim einzelnen Abnehmer möglichst geringe Schwankungen der Stromaufnahme über den Tageslauf und gegebenenfalls über das Jahr zu erreichen und außerdem Überschreitungen eines niedrig liegenden Mittelwertes möglichst zu vermeiden bzw. durch Tarifzuschläge zu belasten.

Die bisherige Situation machte den Kunden immer von Meßanlagen des Elektrizitätsversorgungsunternehmers abhängig. Zusätzlich benötigte er weitere Schaltgeräte, Installationsmaterial, Kabel und diverses Zubehör sowie teure manuelle Arbeitsleistungen für Projektierung und Montage z.B. einer Maximumanlage.

Der Erfindung liegt die Aufgabe zugrunde, eine Anordnung der eingangs erwähnten Art derart auszubilden, daß sie einfach zu installieren, leicht zu handhaben und mit geringem wirtschaftlichen Aufwand herzustellen ist und mit einer verbesserten Leistungserfassung arbeitet.

Diese Aufgabe wird mit den Merkmalen des Patentanspruchs 1 gelöst.

Mit dieser Anordnung ist es möglich, daß bei einer Änderung des Tarifsystems in dem Gebiet eines Elektrizitäts-Versorgungs-Unternehmens (EVU) die Vielzahl der Abnehmer-Anlagen in einfacher Weise so ausgestaltet und ggf. nachträglich umgestellt werden kann, derart, daß bei jedem einzelnen Abnehmer individuell automatisch ein niedrig liegender Wert der zugelassenen Stromaufnahme möglichst eingehalten und ein Überschreiten dieses Wertes zuverlässig verhindert werden kann.

Der Kunde ermittelt aus der Summe aller angeschlossenen Verbraucher seinen Istwert selbst, benötigt also weder einen eigenen separaten Summenzähler und ist unabhängig gegenüber dem EVU.

Die erforderliche Miniaturisierung, die ihm den Einsatz an Stelle des bisherigen Leitungsschutzschalters ermöglicht, wird durch eine neue Technologie erzielt, die die bisherige Strategie der Gerätehersteller, die Aufsplittung der Einzelfunktionen in separate Baueinheiten (Bausteinsysteme), zugunsten höherer Integrationsformen verläßt.

Gemäß einer bevorzugten Ausführungsform ist vorgesehen, daß bei einem auf dem Gesamt-Energieverbrauch in einem bestimmten aus einer Anzahl von Intervallen einer Intervallbreite bestehenden Zeitabschnitt basierenden und so leistungsabhängigen Tarif der Grenzwert für ein folgendes Intervall aus dem Energieverbrauchs-Wert in wenigstens einem zurückliegenden Intervall mittels der Verarbeitungseinheit nach einem vorgegebenen Programm ermittelt wird.

Es wird somit für den jeweils letzten Teil eines für die Tarifbemessung maßgebenden Zeitabschnittes aufgrund des vorangegangenen größeren Teiles eine Prognose gegeben, so daß möglichst kein Teil des zulässigen Energiebezuges vom Elektrizitätswerk ungenutzt bleibt.

Eine derartige Anordnung ist vorzugsweise so ausgebildet, daß der Gesamt-Energieverbrauch EV in einem Zeitabschnitt TP von festgelegter Dauer einem gegebenen EnergieSollwert EP entsprechen und ihn nicht überschreiten soll, daß der Zeitabschnitt in N, vorzugsweise gleich große, Intervalle Z von der Breite TI unterteilt ist, wobei Z die Intervallnummer bezeichnet, die mit der Zeit t von Intervall zu Intervall kontinuierlich ansteigt, daß der Energieverbrauch E1,E2,E3... in jedem Intervall Z = 1,2,3... gemessen und über die letzten Intervalle von Z = 1 bis Z = (N-1) summiert wird zu einem Summenwert ES, der vom Energiesollwert EP für den ganzen Zeitabschnitt TP abgezogen und so ein Differenzwert DE = (EP-ES) gebildet wird, mit dem der Grenzwert im nachfolgenden N-ten Intervall bestimmt wird. Der Zeitabschnitt TP wird im Laufe der Zeit, z.B. über das ganze Jahr, um jeweils ein Intervall TI verschoben.

Mit Hilfe der Verarbeitungseinheit, die nach Art eines Computers zu schneller Datenerfassung und Datenverarbeitung in der Lage ist, kann so der Energieverbrauch insgesamt bzw. in einzelnen Stromkreisen laufend erfaßt und für eine Prognose im letzten Intervall des durch die Tarif-Ausgestaltung vorgegebenen Zeitabschnittes ausgewertet werden. Der Summenwert kann einfach in an sich bekannter Weise vom zugeführten Strom abhängig sein. Um besonderen Anforderungen seitens des Elektrizitäts-Werkes gerecht zu werden, kann der Summenwert auch von der zugeführten Blindleistung oder der zugeführten Wirkleistung abhängig sein.

Eine besonders genaue Anpassung des tatsächlichen Verbrauches an den nach dem Tarif zulässigen Wert ergibt sich, wenn man auch innerhalb des nachfolgenden (letzten) Intervalles, für das eine Prognose gegeben wurde, die verbrauchte Energie laufend mißt und den zulässigen Grenzwert entsprechend der bis zum Ende dieses Intervalles noch verbrauchbaren Energie abfallend verändert. Die Anpassung des Grenzwertes kann kontinuierlich erfolgen; zweckmäßig wird die Anpassung in abfallenden Stufen vorgenommen, wobei die Dauer dieser Stufen eine oder mehrere Minuten betragen kann, um den Aufwand gering zu halten, aber doch den im praktischen Betrieb möglichen Änderungen des Verbrauches gerecht zu werden.

Vorzugsweise ist die Ausbildung derart, daß im Falle der Überschreitung des Grenzwertes durch den momentanen Energieverbrauch wenigstens eines der angeschalteten Geräte entsprechend einer bestimmten Rangfolge im Verbrauch reduziert bzw. ganz oder teilweise abgeschaltet wird oder im Falle eines Unterschreitens des Grenzwertes um mehr als einen vorgegebenen Schwellwert ganz oder teilweise eingeschaltet wird. So wird einerseits eine Überschreitung der gegebenen Grenzen verhindert, andererseits aber auch vermieden, daß zuviel Verbraucherlast abgeschaltet bleibt und somit der gegebene Rahmen des Energiebezuges unvollständig ausgenutzt wird.

Zweckmäßig wird beim Unterschreiten des Grenzwertes zunächst wenigstens ein solches Verbraucher-Gerät wieder eingeschaltet, das vorher im Verbrauch reduziert oder abgeschaltet wurde. Die Verarbeitungseinheit kann solche Ausschaltvorgänge leicht festhalten, und sie kann auch die erneute Einschaltung ggf. nach einer anderen Rangfolge vornehmen, als sie für das Abschalten vorgesehen war.

Zum Reduzieren des Verbrauches kann wenigstens eines der Verbrauchergeräte in Intervallen von z.B. einigen Sekunden oder Minuten Dauer periodisch eingeschaltet und abgeschaltet werden. Es ist auch möglich, zwei oder mehr Verbraucher abwechselnd periodisch ein- und auszuschalten: So kann die Gesamtbelastung vermindert werden, ohne daß eines der Geräte ganz abgeschaltet wird.

Eine Verminderung der Belastung ist auch dadurch möglich, daß wenigstens eines der Verbrauchergeräte in Phasenanschnittsteuerung in jeder Wechselstromperiode verkürzt eingeschaltet und wieder abgeschaltet wird.

Der Schwellwert für eine Verbrauchereinschaltung bei Annäherung an den Grenzwert sollte niedrig gehalten werden und kann etwa einer Energieaufnahme von einem bestimmten Prozentsatz, z.B. 1 bis 3 %, der Grenzwertleistung entsprechen. Wenn die Grenzwertleistung 4 kW entspricht, kann dann die Einschaltung eines weiteren Verbraucher-Gerätes erfolgen, wenn der Gesamt-Energieverbrauch unter etwa 3.900 Watt absinkt, entsprechend einer Reduktion um 2,5 %.

Bei einer Anordnung zum Steuern des Gesamt-Stromverbrauchs eines Elektrizitäts-Abnehmers, bei dem in einen Stromkreis zu einem Verbraucher-Gerät eine Sicherung eingeschaltet und ein in den Stromkreis eingeschalteter Fühler ein Signal liefert, das beim Überschreiten eines Grenzwertes mindestens einen Stromkreis mittels eines steuerbaren Schalters unterbricht, kann in mehreren Stromkreisen sowohl ein Stromfühler als auch ein steuerbarer Schalter eingeschaltet ist und daß die Signale aller Stromfühler einem Steuergerät zugeführt werden, an dem die steuerbaren Schalter angeschlossen sind derart, daß wenigstens einer der Schalter betätigt und der zugeordnete Stromkreis unterbrochen wird, wenn das Summensignal den Grenzwert überschreitet. So läßt sich in einfacher Weise der bei einem neuen Tarif eingeräumte Verbrauchs-Spielraum selbsttätig, ohne Überwachung durch den Elektrizitäts-Abnehmer, ausnutzen.

Der Stromflußfühler ist zweckmäßig als induktiver Meßwertaufnehmer, z.B. als Stromwandler, ausgeführt. Dann ist ein Eingriff in die den Verbraucherstrom führende Leitung nicht erforderlich.

Der steuerbare Schalter kann ein durch einen elektrischen Strom steuerbarer Magnetschalter, z.B. ein Schütz, sein. Er kann aber auch als elektronisch steuerbares Element, z.B. Thyristor, ausgeführt sein; eine solche Ausgestaltung eignet sich vor allem dann, wenn eine periodische Ein- und Ausschaltung in Intervallen oder im Phasentakt vorgenommen werden soll.

Die Verarbeitungseinheit, eine Programmstufe mit Eingabeteil, eine Eingangseinheit, eine Grenzwertstufe, ein Zeitgeber und eine Ausgabeeinheit können, ggf. mit weiteren zweckmäßigen Schaltungsstufen zusammen, in einem Sternergerät vereinigt sein. Im Steuergerät werden die Signale aller Stromfühler verarbeitet, und es wird somit Auskunft über die Gesamtbelastung gegeben, die durch die Verbraucher-Geräte hervorgerufen wird. Die Signale werden nach einem Programm, das vom Anwender, dem Elektrizitäts-Abnehmer, selbst eingegeben bzw. modifiziert werden kann; so kann festgelegt werden, in welcher Reihenfolge im Falle eines Überschreitens des Grenzwertes ein oder mehrere Verbrauchergeräte abgeschaltet oder in ihrer Leistungsaufnahme herabgesetzt werden.

Mit dem Programm werden so Einschalt-Verriegelungen und/oder Zeitablauf-Steuerungen für beliebige Verbraucher-Geräte bzw. Gruppen davon nach einem vorgegebenen Vorrang realisiert. Die Rangfolge muß nicht festliegen, sie kann auch nach zusätzlichen Bedingungen jeweils angepaßt werden.

So kann der Vorrang für ein bestimmtes Verbraucher-Gerät zu verschiedenen Zeiten anders gewählt werden; in den Mittagsstunden kann der Küchenherd bevorrechtigt sein, am Abend ein Elektroboiler zum Duschen und in der Nacht oder am Nachmittag die Waschmaschine oder auch die Spülmaschine oder ein Warmwasserspeicher, der dann im Laufe des Tages, ggf. ohne Nachheizung, vorgewärmtes Wasser liefert. Die Sollwerte, die dabei eine Rolle spielen, können bleibend oder vorübergehend (durch ROM und RAM) festgehalten werden.

Mit einer Zeitsteuerung besteht die Möglichkeit, bestimmten Verbrauchern bestimmte Versorgungszeiten zuzuteilen, z.B. nach Tageszeit oder Jahreszeit. Die Außenbeleuchtung kann so jahreszeitabhängig zu bestimmten Abend- bzw. Nacht-Stunden wirksam gemacht werden.
Durch einen steuerbaren Schalter kann nicht nur eine vollständige Unterbrechung der Stromzufuhr bewirkt werden, sondern es ist auch eine Umschaltung auf niedrigeren Stromverbrauch möglich. So kann z.B. vom Küchenherd die eine und/oder die andere Platte bei hoher Gesamtbelastung abgeschaltet werden, wobei jedoch mindestens eine Platte für einen länger dauernden Kochvorgang eingeschaltet bleiben sollte. Bei Heizplatten mit selbsttätiger Temperaturregelung kann der jeweilige Verbrauch durch den zugeordneten Stromfühler abgetastet und im Falle verminderten Strombedarfes dieser Platte eine andere vorübergehend hinzugeschaltet werden.

Lampenstromkreise können analog herkömmlicher Dimmeinrichtungen in ihrer Leistungsaufnahme stetig gestellt werden, was mittels eines gesteuerten Halbleiterschalters (Thyristor) anstelle eines Magnetschalters leicht zu realisieren ist.

Es ist auch möglich, einen Warmwasserbereiter und den Küchenherd periodisch abwechselnd an- und abzuschalten. Dann dauern zwar die Wassererwärmung und der Kochvorgang länger, jedoch wird eine völlige Ausschaltung bzw. eine Überlastung durch gleichzeitige Einschaltung beider Verbraucher umgangen.

Das Programm kann eingestellt bzw. nachträglich verändert werden mittels einer Tastatur oder einer Magnetkarte, die über eine eingebaute Leseeinrichtung zur Wirkung gebracht wird. Besonders die letztgenannte Lösung eignet sich für die Fälle, in denen vom Elektrizitätswerk her dem Abnehmer ein neues Belastungsprofil zugeordnet werden soll.

Bei einer Anordnung der eingangs erwähnten Art ergibt sich eine besonders einfache Ausführungsform, wenn der steuerbare Schalter, der Stromflußfühler und der Überlastungs-Schalter für einen Stromkreis zu einer Baueinheit zusammengefaßt sind. Der Stromflußfühler kann auch als Sensor bezeichnet werden und gibt das Stromfluß-Signal nach außen. Der steuerbare Schalter nimmt ein Signal von außen entgegen und bewirkt dann das Öffnen oder das Schließen einer Kontaktverbindung. Eine solche Baueinheit wirkt somit als Sensor-Stellglied. Eine solche Baueinheit ist insbesondere dann zweckmäßig, wenn eine nachträgliche Umrüstung erfolgen soll; dann kann die Baueinheit auch mechanisch an der Stelle einer bisherigen Sicherung angeordnet werden, so daß größere Umbauarbeiten nicht erforderlich sind.

Die Baueinheit kann derart gestaltet sein, daß sie an der Stelle des auch bisher benötigten Sicherungselementes in der vorhandenen Elektroverteilung montierbar ist, die so in einfacher Weise für ein neues Tarif-System umgerüstet werden kann.

Vorzugsweise ist wenigstens ein den Stromkreis unterbrechender Schalter einerseits zum Öffnen und zum Schließen von der Verarbeitungseinheit her steuerbar und kann andererseits bei Überlastung selbsttätig geöffnet, aber nur von Hand wieder geschlossen werden. Dann ist im Stromkreis nur eine Kontaktstrecke angebracht, sie kann aber einerseits als Sicherungsschutz in dem betreffenden Stromkreis selbsttätig wirksam sein, und sie kann andererseits für die erwünschte Beeinflussung des Gesamt-Energieverbrauches von außen her geöffnet und wieder geschlossen werden. Vorzugsweise ist ein solcher Schalter als Ruhekontakt ausgebildet, so daß er ohne jede Beeinflussung normalerweise den Strom ungehindert durch den Stromkreis fließen läßt. Die Kontaktstrecke kann dann einerseits mit einer ersten Antriebsvorrichtung gekoppelt sein, die von der Verarbeitungseinheit her angesteuert werden kann, so daß der Stromkreis unterbrochen und wieder geschlossen wird. Andererseits kann der Kontakt geöffnet werden von einer zweiten Antriebsvorrichtung, die bei Überlastung wirksam wird und dann mittels einer Rastung od.dgl. im geöffneten Zustand festgehalten wird; die Rastung ist erst von Hand wieder lösbar, wie das bei einer normalen Sicherung der Fall ist. Zur Betätigung dieser zweiten Antriebsvorrichtung kann in an sich bekannter Weise ein von der Erwärmung abhängiges Element oder ein vom Strom magnetisch angesteuertes Element dienen. Die beiden Antriebsvorrichtungen wirken dabei in gleicher Richtung, nämlich den Kontakt öffnend, so daß eine gegenseitige Störung nicht möglich ist; die Schließung kann von einer Feder bewirkt werden.

Über geeignete Kopplungsstufen, z.B. potentialfreie Optokoppler, können der Verarbeitungsstufe von außen Signale zugeführt werden, z.B. Steuersignale vom Elektrizitätswerk oder einem Maximumwächter, der in einem bestimmten Netzbereich die abgenommene Maximalleistung überwacht. Dazu kann eine Anordnung nach der Erfindung mit einem Rundsteuerempfänger EVU-Signale empfangen, die meist von niedriger Frequenz sind. Das Steuergerät kann mit Hilfe eines Empfängers für höherfrequente Netz-Bus-Signale auch andere Befehle entgegennehmen, z.B. den Aussteuerbefehl eines entfernt befindlichen Maximum-Wächters, der z.B. in einer Hauptverteilung angebracht ist, und diese Befehle können über das Programm in geeigneter Weise ausgewertet und z.B. für das Einstellen des Grenzwertes wirksam gemacht werden.

Bei Drehstromverbrauchern ist zweckmäßig an jede Phasenleitung ein Stromfühler angekoppelt, und die drei Stromfluß-Signale werden der Verarbeitungseinrichtung zugeführt. So können auch unterschiedliche Belastungen einzelner Phasen erfaßt werden, wie sie z.B. bei einem Elektroherd oder bei einem Elektro-Heißwasserspeicher infolge einer Temperatur-Regelung auftreten können. Die gesteuerten Schalter dieses Drehstromverbrauchers werden jedoch zweckmäßig miteinander gekoppelt, so daß im Falle einer Grenzwertüberschreitung alle drei Phasenleitungen dieses Verbrauchers abgeschaltet werden.

Die Teile einer Anordnung nach der Erfindung können zusammen an der Schalttafel angebracht sein; das wird sich insbesondere bei Neuanlagen empfehlen. Es ist aber auch möglich, eine solche Anordnung in getrennten Teilen aufzubauen, z.B. derart, daß der Schalter mit den Antriebseinrichtungen, vorzugsweise als Baueinheit mit dem Stromflußfühler, an einer vorhandenen Schalttafel angeordnet ist, während die Signalverarbeitungsanlage und die zugeordneten Einrichtungen und Stufen an einer anderen Stelle untergebracht sind. Die Verbindung kann dann durch Kabel erfolgen, die an den Baueinheiten fest angebracht sind und an dem Steuergerät mit der Verarbeitungseinrichtung durch Stecker angeschlossen werden.

Beim Aufbau einer Anordnung nach der Erfindung, insbesondere in einem kompakten Gerät, kann es zweckmäßig sein, einzelne Anordnungsteile gegeneinander abzuschirmen, um insbesondere einen Einfluß von Magnetfeldern auf das mit Mikroelektronik-Technik arbeitende Verarbeitungsgerät und ggf. die Programmschaltung auszuschließen.

Die Erfindung wird nachstehend anhand der Zeichnung beispielsweise näher erläutert, die in
- Fig.1: ein Zeitdiagramm zum Ermitteln eines Leistungspreises aus dem Verbrauch in einem längeren Zeitabschnitt zeigt, wobei
- Fig.2: in vergrößertem Maßstab Verhältnisse in einem 96. Intervall wiedergibt, für das der ansteigende Energieverbrauchswert nach den vorangehenden 95 Intervallen ermittelt wird, während
- Fig.3: ein Schaltungsschema einer Anordnung nach der Erfindung darstellt, und
- Fig.4: schematisch einen Schalter andeutet, bei dem ein einziger Kontakt einerseits öffnend und schließend steuerbar ist und andererseits bei Überstrom in dem betreffenden Zweig als selbsttätig auslösende Sicherung wirkt.

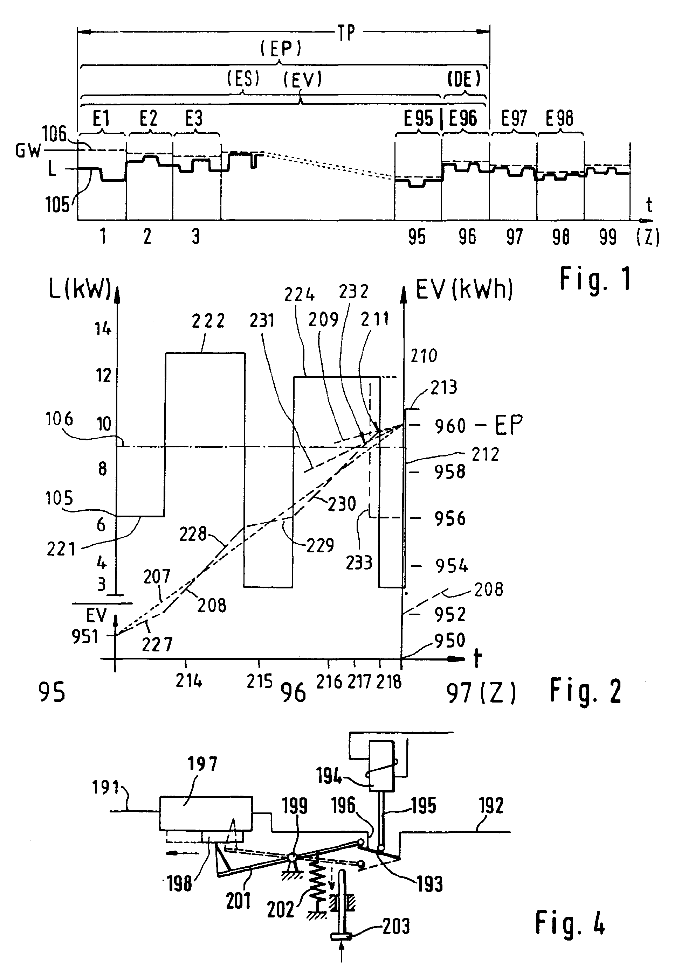

In Fig.1 sind über einer Zeitachse t durch kurze senkrechte Striche Intervalle gleicher Intervallbreite TI und mit einer mit 1 beginnenden fortlaufenden Intervallnummer Z angedeutet.

Als Kurve 105 ist der Verlauf des Gesamtenergieverbrauches EV eines Elektrizitäts-Abnehmers entsprechend der durch Zuschalten oder Abschalten von Verbraucher-Geräten oder durch Ändern von deren Belastung schwankenden Leistung L dargestellt. Die momentane Energieaufnahme kann einfach über die Größe des Stromes bestimmt werden, da die zugehörige Netzspannung für diese Steuerungsaufgabe ausreichend konstant ist und wesentliche Phasenverschiebungen nicht berücksichtigt zu werden brauchen.

Ein Zeitabschnitt TP umfaßt 96 Intervalle Z. Die Energieverbrauchs-Werte (Integral der Leistung) in jedem der Intervalle Z mit der Nr. 1,2,3... entsprechen jeweils E1,E2,E3...

Der Energieverbrauchswert EZ (Energieaufnahme) in jedem Intervall Z entsprechend der Summe bzw. dem Integral der momentanen Leistung L ist ebenfalls unterschiedlich; im Intervall Z = 1 tritt ein Energieverbrauch E1 auf, im Intervall Z = 2 ein Verbrauch E2 usw. bis E95 im Intervall Z = 95, E96 im Intervall Z = 96, E97 im Intervall Z = 97 usw. Die Energieverbrauchswerte EZ sind durch geschweifte Klammern in Fig.1 angedeutet.

Der Gesamt-Energieverbrauch EV eines Elektrizitäts-Abnehmers in jedem Zeitabschnitt TP wird durch Summation der 96 im Zeitabschnitt TP liegenden Energieverbrauchswerte, nach Fig.1 E1 bis E96, erhalten. Diese Summe (auch als Leistungswert LW bezeichnet) ist als EV durch eine geschweifte Klammer angegeben, die die 96 Energieverbrauchswerte E1 bis E96 umfaßt. Diese Summe soll nach dem erwähnten Tarif für jede 96 aufeinanderfolgende Intervalle Z unter einem Höchstwert HW bleiben. Dieser wird vom Abnehmer als Energiesollwert EP vorgewählt; danach richtet sich der berechnete Tarif. Der Energiesollwert ist ebenfalls als geschweifte Klammer über den Intervallen Z = 1 bis Z = 96 angegeben; der Gesamtenergieverbrauch EV soll kleiner oder höchstens gleich sein wie der Energiesollwert EP.

Der betreffende Zeitabschnitt TP wird immer neu bestimmt, z.B. zunächst vom Intervall Z = 1 bis einschließlich Intervall Z = 96, danach von Intervall Z = 2 bis Intervall Z = 97, danach von Intervall Z = 3 bis Intervall Z = 98 usw.. Dementsprechend erfolgt nach Ablauf des 97. Intervalles die Summierung zum Gesamtenergieverbrauch EV mit dem anschließenden Vergleich gegenüber dem Energiesollwert EP über die Intervalle Z = 2 bis Z = 97, danach über die Intervalle Z = 3 bis Z = 98 usw. Der Zeitbereich TP wird so ständig um ein Intervall Z der Breite TI weitergeschoben. Für die Tarifüberwachung wird diese Summierung der Energieverbrauchswerte EZ und der Vergleich des so erhaltenen Gesamtenergieverbrauches EV mit dem Energiesollwert EP zusammen mit der Zählereinrichtung vorgenommen. Wird der Energiesollwert EP in irgendeinem Zeitabschnitt, z.B. im Laufe eines oder mehrerer Monate, überschritten, ist ein Tarifzuschlag zu entrichten, sei es einmalig oder auf bestimmte Zeit oder auf Dauer.

Nach der zugrundeliegenden Aufgabe soll einerseits ein Überschreiten des Energiesollwertes EP sicher vermieden werden, andererseits soll aber im Interesse des Elektrizitäts-Abnehmers der unterhalb von EP angebotete Bereich des Energiebezuges möglichst vollständig ausgenutzt werden.

Wenn 95 Intervalle vergangen sind und Energiebeiträge E1 bis E95 zu einem Energie-Summenwert ES zusammengefaßt sind, kann abgeschätzt werden, wieviel Energie E96 für das nächstfolgende Intervall 96 zur Verfügung steht. Um einerseits den Energiesollwert EP nicht zu überschreiten, ihn aber andererseits möglichst auszunutzen, wird im Rahmen der Erfindung ein Differenzwert DE = (EP - ES) gebildet und dementsprechend ein Grenzwert GW für das Intervall 96 nach dem eingegebenen Programm festgelegt und wirksam gemacht. Die so nach und nach in den jeweils verschobenen Zeitabschnitten TP bestimmten Grenzwerte GW bilden den Kurvenzug 106 in Fig.1.

Dieser Grenzwert gilt streng entsprechend der Waagerechten 106 in Fig.2, wenn die Energieaufnahme gemäß einer Leistung L über das gesamte 96.Intervall konstant bleibt. In der Praxis kann die Leistung L aber durchaus schwanken. Sie muß jedoch im Mittelwert unbedingt eingehalten werden, wenn eine Tariferhöhung vermieden werden soll.

Mit dem o.a. Verschieben des Zeitabschnittes TP bei der Prüfung des sich über jeweils 96 Intervalle Z erstreckenden Leistungswertes LW mit dem Elektrizitätszähler wird auch die nach der Erfindung vorgenommene Summierung der letzten abgeschlossenen 95 Intervalle, die zugleich die ersten 95 Intervalle des neuen, insgesamt 96 Intervalle umfassenden Zeitabschnittes TP sind, weitergeschoben. Das kann in einfacher Weise dadurch erreicht werden, daß von dem im vorangehenden Zeitabschnitt TP zuletzt berechneten Gesamtenergieverbrauch EV der Energieverbrauchswert E1 des darin enthaltenen ersten Intervalles Z = 1 abgezogen wird; dann bleibt die Summe ES der Energiewerte E2 bis E96 übrig, mit der der Differenzwert DE = (EP - ES) zum Bestimmen des Grenzwertes GW im nunmehr umfaßten folgenden Intervall 97 gewonnen wird.

Fig.2 zeigt im vergrößerten Maßstab das 96.Intervall, in dem bei einer Anordnung nach der Erfindung der Grenzwert GW entsprechend der Kurve 106 in Fig.1 aufgrund des früheren Energieverbrauches berechnet ist.

Dabei wird ausgegangen von einem gewählten Energiesollwert EP von 960 kWh , der in 96 aufeinanderfolgenden Stunden verbraucht werden kann. Am Ende des Intervalles Z = 95 hat dabei die Summe der Energieverbrauchs-Werte E1 bis E95 der Intervalle Z = 1 bis Z = 95 den Summenwert ES = 951 kWh erreicht; die Differenz DE bis zum zulässigen Energiesollwert EP = 960 kWh beträgt dann 9 kWh, die im 96.Intervall noch verbraucht werden können. Bei einer konstanten Leistung L von 9 kW entspricht es einem Grenzwert nach der Linie 106 in Fig.2. Der Verbrauchswert würde dann innerhalb des 96.Intervalles entsprechend der Kurve 207 linear ansteigen und am Ende den Energiesollwert EP von 960 kWh erreichen. Die Kurve 207 entspricht somit dem Integral über die Kurve 106, und die Kurve 106 repräsentiert die Steilheit (den Differentialquotienten) der Kurve 207.

Eine strenge Einhaltung eines Leistungs-Grenzwertes wird jedoch nach dem neuen (Leistungswert-)Tarif nicht verlangt; es sind durchaus beträchtliche Schwankungen zulässig, wenn nur der Gesamt-Energieverbrauch EV am Ende des 96.Intervalles den gegebenen Wert von 960 kWh nicht überschreitet. Daraus folgt, daß in dem Beispiel nach Fig.2 der Wert DE unter 9 kWh, der Differenz zwischen dem Anfangswert von 951 kWh und dem Energiesollwert EP von 960 kWh, bleiben soll.

Zeitweise kann daher die Leistung L gemäß der Kurve 105 in Fig.2 stark unterschiedliche Werte, z.B. 3 kW und 13 kW, annehmen.

Der Energieverbrauchswert nach Kurve 208, der dem Zeit-Integral der Leistung L entspricht, steigt dann vom Anfangswert bei 951 kWh bis zum Endwert bei 960 kWh unterschiedlich steil an. Dabei wird zeitweise ggf. mehr Energie aufgenommen, als der Kurve 207 mit dem über das ganze Intervall 96 geltenden Grenzwert 106 entspricht. Es müßte ggf. vor dem Ende des Intervalles Z = 96 ein niedrigerer Grenzwert eingestellt werden; eine Grenzwertüberprüfung könnte dafür, ähnlich wie beim Zeitabschnitt TP durch die Intervalle Z, nach Teilintervallen von 15 bzw. 5 Minuten Länge zu Zeitpunkten 214,215,216,217 und 218 vorgenommen werden.

Wenn der Verbrauchswert nach Kurve 208 sich dem Energiesollwert EP von 960 kWh nähert, müssen ggf. Abschaltungen vorgenommen werden. Es muß aber stets noch ein Verbrauch in Höhe von z.B. 3 kW zulässig bleiben, damit z.B. Telefon-, Computer- und Alarmanlagen sowie eine gewissen Mindestbeleuchtung weiterbetrieben werden können. In Fig.2 ist daher eine Minimal-Grenzwertkurve 209 eingezeichnet, die das Ansteigen des Verbrauchswertes bei einer Leistung von 3 kW bis zum Energiesollwert von 960 kWh am Ende des Intervalles 96 darstellt. Wenn die Verbrauchswert-Kurve 208 die Minimal-Grenzwertkurve 209 am Schnittpunkt 211 erreicht, müssen mittels der steuerbaren Schalter alle abtrennbaren Verbraucher unwirksam gemacht werden. So wird der Verbrauch gemäß der Leistungs-Kurve 105, der im rechten Teil der Fig.2 12 kW beträgt, dort, wo die Kurve 208 die Kurve 209 trifft, anstelle der gestrichelten Kurve 210 des eigentlich eingeschalteten Verbrauchers bis auf 3 kW abgeschaltet.

Aus der unterschiedlichen Steilheit der Verbrauchswert-Kurve 208 läßt sich ihre Tendenz ermitteln und somit eine Prognose für ihren weiteren Verlauf geben. Es kann dann jederzeit der Verbrauch zurückgeschaltet werden, wenn etwa die Minimal-Grenzkurve 209 erreicht wird, ohne daß eine Zwischen-Prüfung zu Zeitpunkten 214 bis 218 erforderlich ist.

Fig.2 ist zu entnehmen, wie auch bei unterschiedlichen Leistungen entsprechend den Kurventeilen 221,222,223 und 224 von 6 kW, 13 kW, 3 kW und 12 kW eine genaue Überwachung zur Einhaltung des Energieverbrauches unterhalb des Energiesollwertes ES von 960 kWh erreicht werden kann. Der Energieverbrauch EV steigt vom links unten angegebenen Anfangswert von 951 kWh nach der Kurve 208 an; dabei entsprechen die unterschiedlich steil ansteigenden Kurvenstücke 227,228,229 und 230 den konstanten Leistungen bei den Kurventeilen 221,222,223 bzw. 224. Es kann nun laufend oder in Intervallen der Anstieg der Kurvenstücke 227,228,229 geprüft werden daraufhin, ob im Falle einer bis zum Ende des Intervalles 96 gleichbleibenden zugehörigen Leistung der Energieverbrauch zu einem Überschreiten des Energiesollwertes EP führt oder nicht. Setzt man derart das zu 6 kW gehörende Kurvenstück 227 oder das zu 3 kW gehörende Kurvenstück 229 fort, so erreicht man das Ende des 96. Intervalles deutlich unter dem Energiesollwert von 960 kWh. Das Kurvenstück 228 entsprechend einer Leistung 13 kW nach dem Kurventeil 222 würde jedoch schon bald über 960 kWh hinausgehen. An der nicht dargestellten Schnittstelle mit der Kurve 209 des Minimal-Grenzwertes müßten dann alle Belastungen abgeschaltet werden, um bis zum Ende des 96. Intervalles einen Grundverbrauch von 3 kW zuzulassen, wie das vorstehend bereits beschrieben wurde.

Es kann aber erwünscht sein, bis zum Ende des 96. Intervalles eine weitere Belastung von 3 kW mit höherer Rangstufe zuzulassen, also zusammen mit dem Grundverbrauch insgesamt 6 kW entsprechend Kurventeil 221. Dann würde sich anstelle des Minimal-Grenzwertes 209 ein Betriebs-Grenzwert entsprechend der Geraden 231 ergeben. Wenn die Verbrauchs-Kurve 208 mit ihrem Teil 230 die Betriebs-Grenzwert-Kurve 231 am Schnittpunkt 232 schneidet, wären die Belastungen geringerer Rangstufen in Höhe von 7 kW, die der Differenz zwischen den Kurventeilen 221,222 entspricht, abzuschalten. Die Leistung hätte dann einen Verlauf nach der gestrichelten Kurve 233. Bis zum Schluß kann dann der Verbrauch insgesamt 6 kW betragen.

Die Kurven 231 und 208 sind im Computer der Verarbeitungseinheit 130 leicht darzustellen und ggf. abzuändern, so daß eine recht genaue und dennoch anpassungsfähige Überwachung und Steuerung möglich ist.

Ist das Intervall 96 beendet, so wird vom Gesamt-Energieverbrauchswert EV des betreffenden Zeitabschnittes TP mit den Einzel-Energieverbrauchswerten E1 bis E 96 der Energieverbrauchswert E1 des Intervalles Z = 1 abgezogen, wodurch für den folgenden, um ein Intervall Z verschobenen Zeitabschnitt TP der die Energieverbrauchswerte E2 bis E96 umfassenden Summenwert ES erhalten wird. Aus diesem wird durch Differenzbildung gegenüber dem Energiesollwert EP der Differenzwert DE für das nunmehr von TP mit umfaßte 97. Intervall gebildet wird. Der Anfangswert der Verbrauchswert-Kurve 208 liegt dann im 97.Intervall um diesen Differenzwert DE von z.B. 8 kWh unter dem Energiesollwert EP von 960 kWh bei 952 kWh. Die im 96. Intervall vorgenommenen Belastungs-Abschaltungen können daher zunächst wieder aufgehoben werden, und die Kurve 105 der Leistung L kann im 97. Intervall gemäß der Flanke 212 auf einen höheren Wert bei 213 springen.

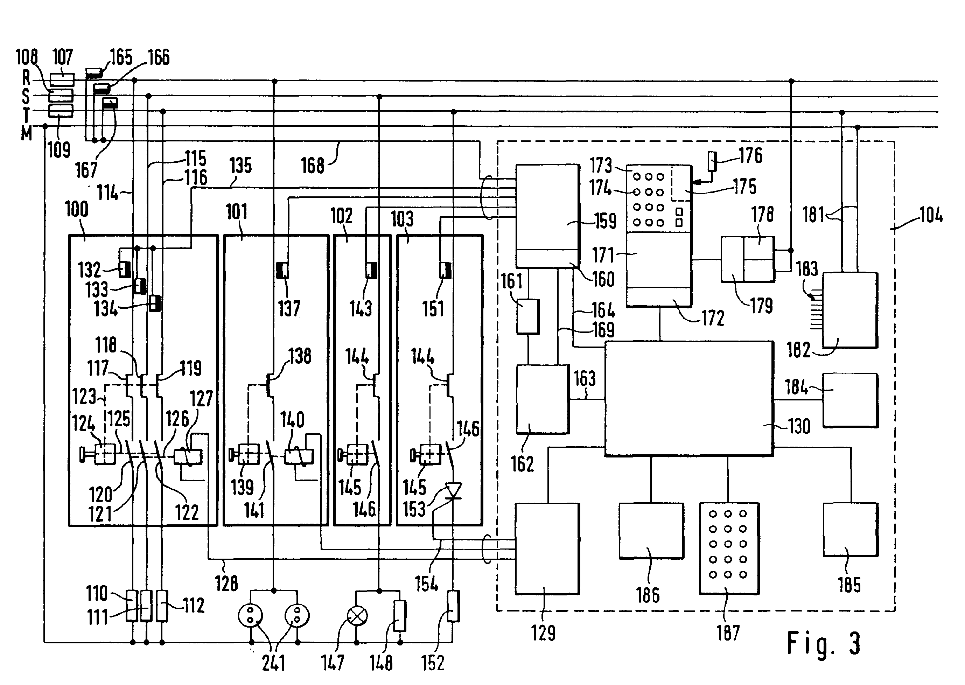

Weitere Einzelheiten der mit den Figuren 1 und 2 erläuterten Funktionen werden anhand eines konkreten Ausführungsbeispiels nach dem Schaltungsschema gem. Fig.3 beschrieben werden.

In Fig.3 ist am oberen Rand eine Drehstromzuleitung dargestellt, die über Sicherungen 107,108,109 an die Phasen R,S,T angeschlossen und mit der Rückleitung M verbunden ist. Die Drehstromzuleitung ist - üblicherweise über Sicherungselemente - mit Verbrauchern 110,111, 112 verbunden, die, z.B. an einem Elektroherd, mit nicht dargestellten, von Hand und/oder temperaturabhängig automatisch betätigten Schaltern angeschlossen oder abgeschaltet werden können.

Dabei sind die üblichen Sicherungselemente ersetzt durch eine Baueinheit 100, die im Zuge der Leitungen 114,115,116 zwischen der Drehstromleitung und den Verbrauchern 110,111,112 angeordnet ist. Im Zuge der Leitungen 114,115,116 sind thermische Sicherungsauslöser 117,118,119 in Reihe mit Schalter-Kontaktstrecken 120, 121,122 angebracht. Diese normalerweise geschlossenen Ruhekontaktstrecken werden von den thermischen Sicherungsauslösern entsprechend der Wirkung einer gestrichelt angedeuteten Kopplung 123 von einer ersten Antriebsvorrichtung 124 über eine gestrichelt angedeutete Kupplungsverbindung 125 zu den Kontaktstrecken 120,121,122 unterbrochen, wenn bei einem zu starken Strom die Sicherungsfunktion ausgelöst werden muß.

Diese Kontaktstrecken 120,121,122 sind weiter entsprechend einer gestrichelten Linie 126 gekuppelt mit einer zweiten Antriebsvorrichtung 127, die als elektromechanisches Relais ausgebildet ist und über die Leitung 128 mit der Ausgangseinheit 129 der zentralen Verarbeitungseinheit 130 verbunden ist.

An den Leitungen 114,115,116 sind Stromflußfühler 132, 133,134 angebracht, die über nicht einzeln dargestellte Leitungen 135 mit der Eingangsstufe 159 der Verarbeitungseinheit 130 verbunden sind.

In entsprechender Weise ist zwischen der Phase R und Masse M eine einphasige Baueinheit 101 angeordnet mit einem Stromfühler 137, einem thermischen Auslöser 138, einer ersten Antriebseinheit 139 und einer zweiten Antriebseinheit 140, welche Antriebseinheiten in entsprechender Weise, wie in der Baueinheit 113, mit einer Kontaktzunge 141 unabhängig voneinander gekuppelt sind. An die Baueinheit 101, die somit, wie die Baueinheit 100, als Sensor-Stellglied und außerdem als Überstromsicherung wirkt, sind Verbrauchergeräte, z.B. Brotröster oder Raumheizgeräte mit Steckeranschlüssen, über Steckdosen 241 anschließbar.

Die Baueinheit 102 ist der Baueinheit 136 ähnlich; sie enthält auch einen Stromflußfühler 143, einen Thermoauslöser 144, eine erste Antriebsvorrichtung 145 für einen Schaltkontakt 146, aber keine zweite Antriebsvorrichtung zur Steuerung von außen. An diese Baueinheit können Glühlampen 147 oder Sicherheitsgeräte 148 angeschlossen sein, die unabhängig von der Funktion einer Anordnung nach der Erfindung in jedem Fall mit Strom versorgt werden sollen. Über den Stromflußfühler 143 wird aber auch dieser Stromkreis bei der Auswertung des Gesamt-Energieverbrauches mit berücksichtigt.

Schließlich ist an die Phase T eine Baueinheit 150 mit einem Stromflußfühler 151 dargestellt, der mit der gleichen thermischen Überstromsicherung 144,145,146 wie in der Baueinheit 102, versehen ist, der aber darüber hinaus im Stromkreis zur Belastung 152 einen Thyristor 153 enthält, der über eine Leitung 154 von der Ausgangseinheit 129 angesteuert werden kann.

Selbstverständlich ist eine kleinere oder größere Anzahl von Baueinheiten der dargestellten Art (100,101, 102 und 103) je nach Bedarf einsetzbar.

Zum Steuern des Gesamtverbrauches sei von einem Leistungstarif ausgegangen, bei dem in einem Zeitabschnitt TP, der 96 Intervalle Z mit einer Intervallbreite TI von einer Stunde Länge umfaßt, der Gesamt-Energieverbrauch EV über jeweils 96 Stunden einen bestimmten Energie-Sollwert EP nicht überschreiten soll. Die Verbraucher-Geräte 110, 111,112,241,147,148,152 liefern mittels der zugehörigen Stromflußfühler 132,133,134,137,143,151 über die zugehörige mehradrigen Leitungen Stromflußsignale an die Eingangsstufe 159. In dieser können die Signale verstärkt und/oder über Analog/Digital-Wandler computergerecht umgewandelt werden, ggf. mit Hilfe eines Speicherteiles 160. Diese Signale werden über eine Summierstufe 161 zu einem den Gesamt-Energieverbrauch EV entsprechenden Signal umgewandelt und einer Grenzwertstufe 162 zugeführt. Wenn der Grenzwert GW erreicht oder gar überschritten wird, wird dies über die Leitung 163 zur Verarbeitungseinheit 130 mitgeteilt. Für weitere Verarbeitungszwecke werden die einzelnen Stromfühler-Signale von der Eingangseinheit 159 der Verarbeitungseinheit 130 über eine mehradride Leitung 164 direkt zugeführt.

Um ein dem Gesamt-Energieverbrauch EV entsprechendes Signal zu gewinnen, können auch Stromflußfühler 165, 166,167 an der Drehstromleitung hinter den Sicherungen 107,108,109 angebracht und ihre Stromfluß-Signale über eine mehradrige Verbindungsleitung 168 über die Eingangsstufe 159 und zusammengefaßt über eine Leitung 169 der Grenzwertstufe 162 zugeführt werden.

Die Verarbeitungseinheit 130 ist an eine Programmstufe 171, ggf. mit Speicher 172, angeschlossen. Sie kann über eine Eingabeeinheit 173 beeinflußt werden, die eine Tastatur 174 trägt und mit einer Leseeinrichtung 175 für eine Magnetkarte 176 versehen ist. Die Programmeinheit 171 kann auch von einer EVU-Steuereinheit 178 beeinflußt werden, die Empfänger für von Einrichtungen des Elektrizitätswerks ausgesandte Signale besitzt, z.B. einen Rundsteuerempfänger TRE für den Empfang von EVU-Signalen und andererseits einen Empfänger für höherfrequente Netz-Bus-Signale. Dieser Steuersignalempfänger 178, der zweckmäßig einen Speicherteil 179 besitzt, kann auch den Aussteuerbefehl eines entfernt befindlichen Maximum-Wächters empfangen, der z.B. in einer Hauptverteilung angebracht ist und der für eine Herabsetzung des bezogenen Energieverbrauches des Abnehmers Sorge trägt, wenn im Gesamtnetz, vorzugsweise auch durch andere Abnehmer, eine Maximalleistung überschritten wird.

Über Leitungen 181 ist weiter ein Speiseteil 182 an das Netz angeschlossen, der, durch kurze Striche 183 angedeutet, die Speiseenergie für die anderen Einheiten und Stufen der Anordnung liefert.

An die Verarbeitungseinheit 130 ist auch ein Elektrizitätszähler 184 angeschlossen, mit dem die von einzelnen Verbrauchergeräten oder von allen zusammen aufgenommene Energie festgestellt und ggf. weitergemeldet werden kann.

Weiter ist ein Zeitgeber 185 angeschaltet, mit dessen Hilfe bei der Verarbeitung der Stromfühlersignale die Tageszeit, Wochentage oder die Jahreszeit berücksichtigt werden können.

Schließlich ist an die Verarbeitungseinheit 130 noch ein Speicher 186 angeschlossen, mit dessen Hilfe Ergebnisse, insbesondere Zwischenergebnisse, verschiedener Art festgehalten werden können.

Mit einer Anzeigefläche 187 kann der Schaltzustand der steuerbaren Schalter 120,121,122,141,146 angezeigt werden. Eine solche Anzeige ist an beliebiger Stelle möglich, ggf. auch an den einzelnen Verbraucher-Geräten bzw. den zugeordneten Steckdosen oder Schaltern.

Die Stromfühler-Signale von der Eingangseinheit 159 werden einerseits über die Leitung 164 direkt und andererseits über die Grenzwertstufe 162 der Verarbeitungseinheit 130 zugeführt, in der sie entsprechend dem von der Programmstufe 171 vorgegebenen Programm verarbeitet werden. Insbesondere werden die Energieverbrauchswerte EZ der einzelnen aufeinanderfolgenden Intervalle Z in dem Umfang, wie er für die Berechnungen erforderlich ist, gespeichert und so bereitgehalten. Danach werden die erforderlichen Berechnungen vorgegeben und der Grenzwert GW festgelegt. Falls eine Überschreitung des Grenzwertes zu befürchten ist, wird wenigstens einer der Stromkreise mittels des zugehörigen steuerbaren Schalters 126,140,153 dauernd oder auf längere oder kürzere Intervalle abgeschaltet derart, daß der momentane Energieverbrauch unter dem Grenzwert gehalten wird. Entsprechend wird dann, wenn später der Energieverbrauch durch Ausschalten wenigstens eines Verbrauchers deutlich sinkt, einer der genannten steuerbaren Schalter, der vorher abgeschaltet worden war, wieder eingeschaltet, um den durch den Energiesollwert EP bedingten Bereich weitmöglichst auszunutzen.

Innerhalb des letzten Intervalles 96, für das ein Grenzwert nach den Intervallen 1 bis 95 vorherbestimmt wurde, wird auch Energie verbraucht, und es kann daher zweckmäßig sein, den Grenzwert GW mit abfallender Tendenz auszubilden entsprechend der Tatsache, daß am Anfang des letzten Intervalles der volle Differenzwert DE noch nicht ausgenutzt ist, die noch verfügbar bleibende Energie aber durch den weiterlaufenden Verbrauch immer geringer wird. Eine optimale Anpassung wird also dann erreicht, wenn dieser tatsächliche Verbrauch durch eine laufende Korrektur des Grenzwertes GW berücksichtigt wird.

Wenn nach einem anderen Tarif nur ein einziges kurzes Intervall TK von z.B. 15 Minuten Dauer, wie der Zeitabschnitt TP in dem vorerwähnten Beispiel vom Elektrizitätswerk für die Überwachung eines maximalen Verbrauches ausgewertet wird, können in einer Anordnung nach der Erfindung Teilintervalle gebildet werden, wie sie bei dem erwähnten Beispiel von Z = 1 bis Z = 96 vorliegen. Es ist aber auch möglich, bei einem derartigen Tarif mit kurzen Überwachungsintervallen eine laufende Summierung des Verbrauches vorzunehmen und anhand einer errechneten Prognose Abschaltungen durchzuführen bis auf einen Minimalverbrauch, wie das anhand der Fig.2 für das 96. Intervall erläutert und beschrieben wurde.

Die Eingangseinheit 159, die Ausgangseinheit 129, die Programmstufe und die weiteren Schaltungsteile um die Verarbeitungseinheit herum können in einem Steuergerät 102 zusammengefaßt sein. Sie können jedoch auch nach Bedarf zu einzelnen Teilgruppen zusammengefaßt sein.

Die Leitungen für die Stromfühlersignale von den Stromfühlern 132,133,134,137,143,151 zur Eingangseinheit 159 können als flexible Kabel ausgebildet und über nicht dargestellte Steckeinrichtungen mit der Eingangseinheit 159 verbindbar sein. Entsprechendes gilt für die Leitungen von der Ausgangseinheit 129 zu den Antriebsvorrichtungen 126,140 bzw. 153 der steuerbaren Schalter.

Über die Programmstufe 171 kann, gesteuert von der Tastatur 174, der Magnetkarte 176 oder dem Steuersignalempfänger 178, der höchstzulässige Energie-Sollwert EP eingegeben bzw. nachträglich verändert werden.

Fig.4 zeigt einen Schalter für eine Baueinheit 100 oder 101, bei dem ein Stromkreis 191,192 mittels eines einzigen beweglichen Kontaktes 193 unterbrochen wird. Dieser Ruhekontakt 193 kann einerseits von einer ersten Antriebsvorrichtung 194, z.B. einer Magnetspule, mit einem bei hindurchfließendem Strom herausgeschobenen Anker 195 betätigt werden, der nach Art eines Stößels die Kontaktzunge 193 vom Gegenkontakt 196 wegdrückt. Je nachdem, ob der Strom durch die Magnetspule 194 eingeschaltet ist oder nicht, wird somit der Kontakt 193 geöffnet oder bleibt geschlossen.

Weiterhin ist eine zweite Antriebsvorrichtung 197 im Stromkreis 191,192 angebracht, mit dem eine Rastung 198 in Richtung des angegebenen Pfeiles verschoben werden kann, wenn ein unzulässig starker Strom die Leitung 191,192 durchfließt. An einem Drehpunkt 199 ist ein Hebel 201 gelagert, der an seinem, der Rastung 198 abgewandten Ende unter der Wirkung einer Zugfeder 202 steht, die das Ende des Hebels 201 auf die Rastung 198 drückt. Das andere Ende des Hebels 201 ist mit einem gewissen Abstand unterhalb der Kontaktzunge 193 positioniert. Wenn nun ein Überstrom auftritt und die Rastung 198 in Richtung des Pfeiles in die gestrichelt angedeutete Lage verschoben wird, wird das aufliegende Ende des Hebels 201 freigegeben, und unter Wirkung der Feder 202 wird der Hebel 201 gedreht derart, daß die Kontaktzunge 193 abgehoben wird. Der Hebel 201 bleibt in dieser Lage, bis er von Hand mittels eines Druckknopfes 203 wieder zurückgeschoben wird, wobei die an der Rastung 198 gezeichnete schräge Rampe dazu dient, während des Hinunterdrückens des Hebels 201 mittels des Druckknopfes 203 die Rastung vorübergehend nach außen zu schieben, wonach die in der Zeichnung dargestellte Ausgangslage wieder erreicht wird. Im ausgeschalteten Zustand nehmen der Hebel 201 und die Kontaktzunge 203 die gestrichelt eingezeichneten Lagen ein.

### Bezugszeichenliste

- 100: Baueinheit
- 101: Baueinheit
- 102: Baueinheit
- 103: Baueinheit
- 104: Steuergerät
- 105: Leistung
- 106: Grenzwert (GW)
- 107,108,109: Sicherungen
- 110,111,112: Verbraucher-Geräte
- 113: Baueinheit
- 114,115,116: Leitungen
- 117,118,119: Sicherungsauslöser
- 120,121,122: Schalter-Kontaktstrecken
- 123: Wirkverbindung
- 124: erste Antriebsvorrichtung
- 125: Kupplungsverbindung
- 126: zweite Kupplungsverbindung
- 127: zweite Antriebsvorrichtung
- 128: Leitung
- 129: Ausgangseinheit
- 130: Verarbeitungseinheit
- 132,133,134: Stromflußfühler
- 135: Leitung
- 136: Baueinheit
- 137: Stromflußfühler
- 138: Thermoauslöser
- 139: erste Antriebsvorrichtung
- 140: zweite Antriebsvorrichtung
- 141: Schalter-Kontaktstrecke
- 142: Baueinheit
- 143: Stromflußfühler
- 144: Thermoauslöser
- 145: erste Antriebsvorrichtung
- 146: Schalter-Kontaktstrecke
- 147: Glühlampen
- 148: Sicherheits-Verbraucher
- 150: Baueinheit
- 151: Stromflußfühler
- 152: Verbraucher-Gerät
- 153: Thyristor
- 154: Leitung
- 159: Eingangsstufe
- 160: Speicherteil
- 161: Summierstufe
- 162: Grenzwertstufe
- 163: Leitung
- 164: Leitung
- 165,166,167: Stromflußfühler
- 168: Leitung
- 169: Leitung
- 171: Programmeinheit
- 172: Speicher
- 173: Eingabeeinheit
- 174: Tastatur
- 175: Leseeinrichtung
- 176: Magnetkarte
- 178: Steuersignal-Empfänger
- 179: Speicher
- 181: Leitungen
- 182: Speiseteil
- 183: Anschlüsse
- 184: Elektrizitäts-Zähler
- 185: Zeitgeber
- 186: Speicher
- 187: Anzeigefläche
- 191,192: Stromkreis
- 193: Kontakt
- 194: erste Antriebsvorrichtung
- 195: Anker
- 196: Gegenkontakt
- 197: zweite Antriebsvorrichtung
- 198: Rastung
- 199: Drehpunkt
- 201: Hebel
- 202: Feder
- 203: Druckknopf
- 204: Einstellvorrichtung
- 205:
- 206:
- 207: Verbrauchswert (zu 106)
- 208: Verbrauchswert (zu 105)
- 209: Minimal-Grenzwertkurve
- 210: Abschaltwert
- 211: Schnittpunkt
- 212: Flanke
- 213: Verbrauchswert
- 214,215,216,217,218: Zeitpunkte
- 221,222,223,224: Kurventeile
- 227,228,229,230: Kurvenstücke
- 231: Betriebs-Grenzwertkurve
- 232: Schnittpunkt
- 233: Kurve
- 241: Steckdosen
- DE: Differenzwert
- E1,E2...: Energieverbrauchs-Wert
- EP: Energiesollwert
- ES: Summenwert
- EV: Gesamt-Energieverbrauch
- EZ: Energieverbrauchswert
- GW: Grenzwert
- HW: Höchstwert
- L: momentane Leistung
- LW: Leistungswert
- TI: Intervallbreite
- TIK: Teilintervall
- TP: Zeitabschnitt
- t: Zeitachse
- Z: Intervallnummer

## Patentansprüche

1. Anordnung zum Steuern des Gesamt-Energieverbrauches (EV) eines Elektrizitäts-Abnehmers, bei der in mehreren Stromkreisen (114,115,116) zu je einem Verbraucher-Gerät (110,111,112,147,148,152,241) außer einem Überlastungsschalter (117,118,119,124,125; 138,139;144,145) sowohl je ein steuerbarer Schalter (120,121,122,127,140,141,145,146) als auch je ein Stromfluß-Signal liefernder Stromflußfühler (132, 133,134,137,143,151) eingeschaltet sind und bei der die Stromfluß-Signale, ggf. über Zwischenstufen wie Verstärker, einer Verarbeitungseinheit (130) (Computer) zugeführt werden, wobei, vorzugsweise aus den Stromflußsignalen, ein Summen-Signal gebildet wird und wobei an die Verarbeitungseinheit die steuerbaren Schalter (120,121,122,127,140,141,145,146) angeschlossen sind derart, daß wenigstens einer der Schalter betätigt und der zugeordnete Stromkreis unterbrochen wird, wenn das Summensignal einen Grenzwert überschreitet oder wenn andere Abschaltkriterien vorliegen, wobei der Stromflußfühler (132,133,134, 137,143,151), der steuerbare Schalter (120,121,122, 127,140,141,145,146) und der Überlastungsschalter (117,118,119,124,125) zu einer als Sensor-Stellglied wirkenden Baueinheit (100,101,102,103) zusammengefaßt sind,
dadurch gekennzeichnet,
a) daß die Baueinheit (100,101,102,103) derart gestaltet ist, daß sie an der Stelle des auch bisher benötigten Sicherungselementes in einer vorhandenen Elektroverteilung montierbar ist,
b) daß zum Schalten des Stromkreises (114,115,116) eine Kontaktstrecke (193) dient, die gekoppelt ist einerseits mit einer (zweiten) Antriebsvorrichtung (194), die von der Verarbeitungseinheit (130) her den Kontakt öffnend und schließend steuerbar ist, und andererseits mit einer (ersten) Antriebsvorrichtung (197), die beim Auftreten einer Überlastung im Stromkreis die Kontaktstrecke (193) öffnet und mittels einer Rastung (198;203), nur von Hand in die Ausgangslage zurückgebracht werden kann,
c) daß für Drehstromverbraucher in jede Phasenleitung (R,S,T) ein Stromflußfühler (132,133,134, 137,143,151) angekoppelt ist, deren Signale zusammengefaßt das Summensignal bilden, das von der zugeführten Blindleistung und von der zugeführten Wirkleistung abhängig ist, und die in jeder der drei Leitungen angeordneten Schalter (120,121,122) gleichzeitig geöffnet bzw. geschlossen werden,
d) daß das Programm für die Verarbeitungseinheit (130) eine Programmstufe (171) liefert, deren Einstellung mittels einer von einer Magnetkarte (176) steuerbaren Leseeinrichtung (175) durchführbar ist.

2. Anordnung nach Anspruch 1,
dadurch gekennzeichnet,
daß bei einem auf dem Gesamt-Energieverbrauch (EV) in einem bestimmten aus einer Anzahl (N) von Intervallen (Z) einer Intervallbreite (TI) bestehenden Zeitabschnitt (TP) basierenden und so leistungsabhängigen Tarif der Grenzwert (GW) für ein folgendes Intervall (Z) aus dem Energieverbrauchs-Wert (E1,E2...) in wenigstens einem zurückliegenden Intervall (Z) mittels der Verarbeitungseinheit (130) nach einem vorgegebenen Programm ermittelt wird.

3. Anordnung nach Anspruch 2,
dadurch gekennzeichnet,
daß der Gesamt-Energieverbrauch (EV) in einem Zeitabschnitt (TP) von festgelegter Dauer einem gegebenen Energie-Sollwert (EP) entsprechen und ihn nicht überschreiten soll,
daß der Zeitabschnitt (TP) in N, vorzugsweise gleich große, Intervalle (Z) von der Breite (TI) unterteilt ist, wobei (Z) die Intervallnummer bezeichnet, die mit der Zeit (t) von Intervall zu Intervall kontinuierlich ansteigt,
daß der Energieverbrauch (EZ) in jedem Intervall (Z) gemessen und über die letzten (N-1) Intervalle summiert wird zu einem Summenwert (ES), der vom Energie-Sollwert (EP) für den ganzen Zeitabschnitt (TP) abgezogen und so ein Differenzwert DE = (EP - ES) gebildet wird, mit dem der Grenzwert (GW) im nachfolgenden N-ten Intervall bestimmt wird.

4. Anordnung nach einem der vorangehenden Ansprüche,
dadurch gekennzeichnet,
daß die vom Anfang des nachfolgenden (N-ten) Intervalles ab verbrauchte Energie laufend gemessen und der zugehörige Grenzwert (GW) entsprechend der bis zum Ende des (N-ten) Intervalles noch verbrauchbaren Energie abfallend verändert wird.

5. Anordnung nach Anspruch 4,
dadurch gekennzeichnet,
daß der Grenzwert (GW) in mehreren Stufen von z.B. zuerst 15 und zuletzt 5 Minuten Dauer abfallend verändert wird.

6. Anordnung nach einem der Ansprüche 1 bis 5,
dadurch gekennzeichnet,
daß die vom Anfang des nachfolgenden (N-ten) Intervalles ab verbrauchte Energie laufend gemessen wird und erst bei Annäherung an den Energiesollwert (EP) der Grenzwert wirksam gemacht wird und erforderlichenfalls die aufgenommene Leistung (L; Kurve 105) mittels der steuerbaren Schalter selbsttätig reduziert wird.

7. Anordnung nach Anspruch 1 bis 5,
dadurch gekennzeichnet,
daß die vom Anfang eines nachfolgenden (N-ten) Intervalles ab verbrauchte Energie laufend gemessen und bei Annäherung an eine am Ende des (N-ten) Intervalles zum Energiesollwert (EP) hin verlaufende Grenzwertkurve minimalen Verbrauches erforderlichenfalls die aufgenommene Leistung (L; Kurve 105) mittels der steuerbaren Schalter selbsttätig reduziert wird.

8. Anordnung nach einem der vorhergehenden Ansprüche,
dadurch gekennzeichnet,
daß im Falle der Überschreitung des Grenzwertes (GW) durch den momentanen Energieverbrauch (LZ) wenigstens eines der angeschalteten Geräte (110,111,112,241,147, 148,152) entsprechend einer bestimmten Rangfolge im Verbrauch reduziert bzw. ganz oder teilweise abgeschaltet wird oder im Falle eines Unterschreitens des Grenzwertes (GW) um mehr als einen vorgegebenen Schwellwert (SW) ganz oder teilweise eingeschaltet wird.

9. Anordnung nach Anspruch 8,
dadurch gekennzeichnet,
daß beim Unterschreiten des Grenzwertes (GW) zunächst wenigstens ein solches Verbraucher-Gerät (241,147,148) wieder eingeschaltet wird, das bei einem vorangehenden Abschalten im Verbrauch reduziert oder abgeschaltet wurde.

10. Anordnung nach Anspruch 9,
dadurch gekennzeichnet,
daß wenigstens eines der Verbraucher-Geräte (141,147, 148) in Intervallen von z.B. einigen Sekunden oder Minuten Dauer periodisch eingeschaltet und abgeschaltet wird.

11. Anordnung nach Anspruch 9,
dadurch gekennzeichnet,
daß wenigstens eines der Verbraucher-Geräte (152) in Phasenanschnittsteuerung in jeder Wechselstromperiode eingeschaltet und abgeschaltet wird.

12. Anordnung nach Anspruch 9, 10 oder 11,
dadurch gekennzeichnet,
daß der Schwellwert (SW) für Verbrauchereinschaltung etwa einer Energieaufnahme von einem bestimmten Prozentsatz, z.B. 1 bis 3 %, der Grenzwert-Leistung entspricht.

13. Anordnung nach einem der vorhergehenden Ansprüche,
dadurch gekennzeichnet,
daß die Kontaktstrecke (193) des nach dem Grenzwert (GW) steuerbaren Schalters (120,121,122) einen Ruhekontakt darstellt.

14. Anordnung nach einem der vorhergehenden Ansprüche,
dadurch gekennzeichnet,
daß die Stromfluß-Signale der Verarbeitungseinheit (130) über Analog/Digital-Wandler zugeführt werden.

15. Anordnung nach Anspruch 14,
dadurch gekennzeichnet,
daß die A/D-Wandler in der Eingangsstufe (159) enthalten sind.

16. Anordnung nach einem der vorhergehenden Ansprüche 1 bis 14,
dadurch gekennzeichnet,
daß die A/D-Wandler in der Nähe der Stromflußfühler (132,133,134) angebracht sind.

17. Anordnung nach einem der vorhergehenden Ansprüche,
dadurch gekennzeichnet,
daß die Verarbeitungseinheit (130), die Programmstufe (171), die Eingangsstufe (159), die Ausgangsstufe (129) und/oder die Grenzwertstufe (162) sowie ggf. erforderliche weitere Stufen wie Speicher und Speiseschaltungen in einem Steuergerät (104) zusammengefaßt sind.

18. Anordnung nach Anspruch 17,
dadurch gekennzeichnet,
daß die Verbindungen von den Stromflußfühlern (132,133,134) zur Eingangsstufe (159) über flexible Kabel, vorzugsweise mit Steckeranschluß, vorgenommen sind.

19. Anordnung nach einem der vorhergehenden Ansprüche,
dadurch gekennzeichnet,
daß die Verbindung von der Ausgangseinheit (129) zu den Antriebsvorrichtungen (127) der steuerbaren Schalter (120,121,122) über flexible Kabel, vorzugsweise mit Steckeranschluß, vorgenommen sind.

20. Anordnung nach einer der vorhergehenden Ansprüche,
dadurch gekennzeichnet,
daß die das Programm für die Verarbeitungseinheit (130) liefernde Programmstufe (171) nachträglich einstellbar ist.

21. Anordnung nach Anspruch 20,
dadurch gekennzeichnet,
daß die Einstellung mittels einer Tastatur (174) durchführbar ist.

22. Anordnung nach einem der vorhergehenden Ansprüche,
dadurch gekennzeichnet,
daß Vorrang bzw. Nachrang für die Schalterbetätigung nachträglich veränderbar ist.

23. Anordnung nach einem der vorhergehenden Ansprüche,
dadurch gekennzeichnet,
daß der steuerbare Schalter elektronisch, z.B. als Thyristor (153), betätigbar ist.

24. Anordnung nach einem der vorhergehenden Ansprüche,
dadurch gekennzeichnet,
daß einzelne Verbraucher (241,147,148) periodisch abwechselnd aus- bzw. einschaltbar sind.

25. Anordnung nach einem der vorhergehenden Ansprüche,
dadurch gekennzeichnet,
daß Einschaltverriegelungen zwischen beliebigen Verbraucher-Geräten durchführbar sind.

26. Anordnung nach einem der vorhergehenden Ansprüche,
dadurch gekennzeichnet,
daß der Schaltzustand wenigstens eines Schalters (141,146) optisch angezeigt wird.

27. Anordnung nach Anspruch 26,
dadurch gekennzeichnet,
daß eine Anzeigefläche (187), insbesondere am Steuergerät (104), angebracht ist.

28. Anordnung nach Anspruch 26 oder 27,
dadurch gekennzeichnet,
daß die Schaltzustände "stromführend", "bereit für Stromführung", "nicht bereit für Stromführung" angezeigt werden.

29. Anordnung nach einem der Ansprüche 26, 27 oder 28,
dadurch gekennzeichnet,
daß eine Anzeigefläche an wenigstens einem der Verbraucher-Geräte (241,147,148) angebracht ist.

30. Anordnung nach einem der vorhergehenden Ansprüche,
dadurch gekennzeichnet,
daß der Verarbeitungseinheit (130) wenigstens ein Tageszeitsignal, ein Wochentagssignal und/oder ein Jahreszeitsignal zuführbar ist.

31. Anordnung nach einem der vorhergehenden Ansprüche,
dadurch gekennzeichnet,
daß der Verarbeitungseinheit (130) wenigstens ein Signal von außen, vorzugsweise über Optokoppler, zuführbar ist.

32. Anordnung nach Anspruch 31,
dadurch gekennzeichnet,
daß externe Steuersignale, z.B. für die Zählereinstellung, Rundsteuerimpulse od.dgl. vom EVU zuführbar (178) sind.

33. Anordnung nach einem der vorhergehenden Ansprüche,
dadurch gekennzeichnet,
daß an die Verarbeitungseinheit (130) ein Elektrizitätszähler (184) angeschlossen ist.

34. Anordnung nach einem der vorhergehenden Ansprüche,
dadurch gekennzeichnet,
daß alle Anordnungsteile zusammen an einer Schalttafel angebracht sind.

35. Anordnung nach einem der vorhergehenden Ansprüche,
dadurch gekennzeichnet,
daß die Anordnungsteile gegeneinander abgeschirmt sind.

36. Anordnung nach einem der vorhergehenden Ansprüche,
dadurch gekennzeichnet,
daß Stromflußfühler (z.B. 137) und steuerbarer Schalter (z.B. 141) an der Schalttafel angebracht sind, die weiteren Anordnungsteile jedoch entfernt davon, z.B. in einem Steuergerät (140), angeordnet sind.

37. Anordnung nach einem der vorhergehenden Ansprüche,
dadurch gekennzeichnet,
daß der zulässige Sollwert (SW) vom Elektrizitäts-Abnehmer auf begrenzte Zeit geändert, vorzugsweise angehoben werden kann.

38. Anordnung nach einem der vorhergehenden Ansprüche,
dadurch gekennzeichnet,
daß an die Verarbeitungsstufe ein, ggf. registrierender, Maximum-Wächter angeschaltet ist.

## Claims

1. Device for controlling the total energy consumption (EV) of an electricity consumer, in which, in several electric circuits (114,115,116) for one consumer's appliance each (110,111,112,147,148,152,241), apart from an overload circuit breaker (117,118,119,124,125;138,139;144,145), both one controllable circuit breaker (120,121,122,127, 140,141,145,146) as well as one current flow sensor each (132,133,134,137,143,151) supplying a current flow signal are inserted and in which the current flow signals, if necessary, are supplied via intermediate stages such as amplifiers to a processing unit (130)(computer), in which, preferably from the current flow signals, a composite signal is formed and wherein the controllable circuit beakers (120,121,122,127,140,141,145,146) are connected to the processing unit in such a way that at least one of the circuit breakers is operated and the allocated circuit is disconnected when the composite signal exceeds a limit value or when other disconnection criteria exist, in which the current flow sensor (132,133,134,137,143, 151), the controllable circuit breaker (120,121,122,127, 140,141,145,146) and the overload circuit breaker (117, 118,119,124,125) are combined into an assembly acting as a sensor actuating mechanism,
**characterized in that**
a) the assembly (100,101,102,103) is constructed in such a way that it can be mounted in the place of the fuse element also required up to now in an existing electric distribution system;
b) for the switching of the circuits (114,115,116) a contact path (193) serves which, on the one hand, is coupled to a (second) drive means (194) which, from the processing unit (130), is controllable so as to break and close the contact and, on the other hand, to a (first) drive means (197) which, when an overload occurs in the circuit of the contact path (193), is opened and, by means of a catch (198;203) and can only be returned into its initial position by hand;
c) that for the three-phase current consumer a current flow sensor (132,133,134,134,137,143,151) is coupled in each phase line (R, S, T), whose signals, when combined, form the composite signal, which is dependent upon the reactive power supplied and from the active power supplied and which are in the circuit breakers (120,121,122) disposed in each of the three lines are simultaneously broken or closed;
d) that the program for the processing unit (130) supplies one program stage (171), whose adjustment can be effected with the aid of a reading device (175) that is controllable by a magnetic card.

2. Device according to Claim 1,
**characterized in that**,
in a tariff based upon the total energy consumption (EV) and thus power output-dependent, in a specific period (TP) consisting of a plurality (N) of intervals (Z) having an interval width (TI), the limit value (GW) of a following interval (Z) is determined from the energy consumption value (E1,E2...) in at least one earlier interval (Z) with the aid of the processing unit (130) according to a preset program.

3. Device according to Claim 2,
**characterized in that**
the total energy consumption (EV) within a period (TP) of fixed duration corresponds to a given energy target value (EP) and is not to exceed the same;
in that the period (TP) in (N) is subdivided into preferably equally large intervals (Z) possessing the width (TI), wherein (Z) designates the interval number which increases continually with the time (t) from interval to interval;
in that the energy consumption (E2) is measured in each interval (Z) and summed up over the last (N-1) intervals to a summation value (ES), which is deducted from the energy target value (EP) for the entire period (TP) and a differential value DE = (EP - ES) is formed, with the aid of which the limit value (GW) is determined in the following N-th interval.

4. Device according to any of the preceeding claims,
**characterized in that**
the energy consumed is continually measured from the start of the following (N-th) interval onwards and the associated limit value (GW) is modified so as to be decreasing in accordance with the energy still to be consumed up to the end of the (N-th) interval.

5. Device according to Claim 4,
**characterized in that**
the limit value (GW) is decreasongly modified in several stages of e.g. a duration of at first 15 minutes and last of 5 minutes.

6. Device according to any of Claims 1 to 5,
**characterized in that**
the energy consumed from the start of the following (N-th) interval onwards is continually measured and in that the limit value is rendered effective only when approaching the energy target value (EP) and, if necessary, the power consumed (L; curve 105) is automatically reduced with the aid of the controllable circuit breakers.

7. Device according to Claims 1 to 5,
**characterized in that**
the energy consumed from the start of a following (N-th) interval onwards is continually measured and, when approaching, at the end of the (N-th) interval, a limit value curve of minimal consumption proceeding towards the energy target value (EP), if necessary, the power consumed (L; curve 105) is automatically reduced with the aid of the controllable circuit breakers.

8. Device according to any of the preceding claims,
**characterized in that**,
in the event of the limit value (GW) being exceeded by the momentary energy consumption (LZ), at least one of the switched-on appliances (110,111,112,241,147,148, 152), at a certain order of precedence is reduced in consumption or completely or partially disconnected or, in the event of falling below the limit value (GW), is switched on fully or partially by more than a preset theshold value (SW).

9. Device according to Claim 8,
**characterized in that**,
when falling below the limit value (GW), first of all at least one such consumers' appliance (241,147,148) is switched on again which, in a preceding disconnection, was reduced in consumption or disconnected.

10. Device according to Claim 9,
**characterized in that**
at least one of the consumers' appliances (141,147,148) is periodically switched on and disconnected at intervals of e.g. some seconds' or minutes' duration.

11. Device according to Claim 9,
**characterized in that**
at least one of the consumers' appliances (152) is switched on and disconnected in phase angle control in each A.C. period.

12. Device according to either Claim 9, 10 or 11,
**characterized in that**
the threshold value (SW) for consumer turn-on corresponds approximately to an energy consumption of acertain persentage, e.g. 1 to 3% of the limit value power output.

13. Device according to any of the preceding claims,
**characterized in that**
the contact path (193) of the circuit breakers (120,121, 122) that is controllable in accordance with the limit value (GW) constitutes a resting contact.

14. Device according to any of the preceding claims,
**characterized in that**
the current flow signals of the processing unit (130) are supplied with the aid of analog/digital transducers.

15. Device according to Claim 14,
**characterized in that**
the analog/digital transducers are comprised in the input stage (159).

16. Device according to any of the preceding Claims 1 - 14,
**characterized in that**
the analog/digital transducers are disposed in the proximity of the current flow sensors (132,133,134).

17. Device according to any of the preceding claims,
**characterized in that**
the processing unit (130), the program stage (171), the input stage (159), the output stage (129) and/or the limit value stage (162) as well as possibly necessary further stages, such as memories and supply circuits, are combined in a control unit (104).

18. Device according to Claim 17,
**characterized in that**
the connections from the current flow sensors (132,133, 134) to the input stage (159) are effected by means of flexible cables, by preference with plug and socket connections.

19. Device according to any of the preceding claims,
**characterized in that**
the connections from the output unit (129) to the drive means (127) of the controllable circuit breakers (120, 121,122) are effected by means of flexible cables, by preference with plug and socket connections.

20. Device according to any of the preceding claims,
**characterized in that**
the program stage (171) supplying the program for the processing unit (130) can be adjusted afterwards.

21. Device according to Claim 20,
**characterized in that**
the adjustment can be effected with the aid of a keyboard (174).

22. Device according to any of the preceding claims,
**characterized in that**
the priority or the lower priority of the circuit breaker actuation can be changed afterwards.

23. Device according to any of the preceding claims,
**characterized in that**
the controllable circuit breaker can be actuated electronically, e.g. in the form of a thyristor (153).

24. Device according to any of the preceding claims,
**characterized in that**
individual consumers (241,147,148) can be periodically and alternately disconnected or switched on.

25. Device according to any of the preceding claims,
**characterized in that**
closing lockouts between any of the consumers' appliances whatever can be effected.

26. Device according to any of the preceding claims,
**characterized in that**
the switching status of at least one circuit breaker (141,146) is indicated optically.

27. Device according to Claim 26,
**characterized in that**
a display area (187) is fitted particularly to the control unit (104).

28. Device according to either Claim 26 or 27,
**characterized in that**
the switching statuses "current-carrying", "ready for current conduction", "not ready for current conduction" are indicated.

29. Device according to any of Claims 26,27 or 28,
**characterized in that**
a display area is mounted on at least one of the consumers' appliances (241,147,148).

30. Device according to any of the preceding claims,
**characterized in that**
at least a time of the day signal, a weekday signal and/or a season signal can be supplied to the processing unit (130).

31. Device according to any of the prteceding claims,
**characterized in that**
at least one signal can be supplied to the processing unit (130) from the outside, preferably via an optical coupler.

32. Device according to Claim 31,
**characterized in that**
external control signals, e.g. for the meter adjustment, ripple control pulses or the like can be supplied by the EVU.

33. Device according to any of the preceding claims,
**characterized in that**
an electricity meter (184) is connected to the processing unit (130).

34. Device according to any of the preceding claims,
**characterized in that**
all device components are mounted together on a control board.

35. Device according to any of the preceding claims,
**characterized in that**
the device components are shielded against each other.

36. Device according to any of the preceding claims,
**characterized in that**
current flow sensor (e.g. 137) and controllabel circuit breaker (e.g. 141) are mounted on the control board, the further device components are, however, disposed remote therefrom, e.g. in a control unit (140).

37. Device according to any of the preceding claims,
**characterized in that**
the permissible target value (SW) can, for a limited period of time, be changed by the electricity consumer, preferably increased.

38. Device according to any of the preceding claims,
**characterized in that**
a possibly registering maximum demand monitor is connected to the processing stage.

## Revendications

1. Dispositif pour commander la consommation totale d'énergie (EV) d'un récepteur de courant pour lequel aussi bien un commutateur qui peut être commandé (120, 121, 122, 127, 140, 141, 145, 146) aussi bien qu'un détecteur de conduction de courant (132, 133, 134, 137, 143, 151) qui donne un signal de conduction de courant sont mis en circuit, en plus d'un commutateur de surcharge (117, 118, 119, 124, 125), dans plusieurs circuits (114, 115, 116) pour chacun des appareils consommateurs (110, 111, 112, 147, 148, 152, 241) et pour lequel les signaux de conduction de courant sont amenés à une unite de traitement (130) (ordinateur) éventuellement par des étages intermédiaires comme des amplificateurs, un signal de somme étant formé de préférence à partir des signaux de conduction de courant et les commutateurs qui peuvent être commandés (120, 121, 122, 127, 140, 141, 145, 146) étant raccordés à l'unité de traitement de telle manière qu'au moins l'un des commutateurs est actionné et que le circuit correspondant est interrompu lorsque le signal de somme dépasse une valeur limite ou lorsque l'on est en présence d'autres critères de rupture, le détecteur de conduction de courant (132, 133, 134, 137, 143, 151), le commutateur qui peut être commandé (120, 121, 122, 127, 140, 141, 145, 146) et le commutateur de surcharge (117, 118, 119, 124, 125) étant réunis en un composant (100, 101, 102, 103) qui agit comme un vérin détecteur,
**caractérisé en ce**
a) que le composant (100, 101, 102, 103) est configuré de telle manière qu'il peut être monté à l'endroit de l'élément de fusible dont on avait besoin jusqu'à présent dans une distribution électrique existante,
b) qu'une voie de contact (193) sert à commuter le circuit (114, 115, 116), voie qui est couplée d'une part à un (second) dispositif d'entraînement (194) qui peut être commandé à partir de l'unité de traitement (130) en ouvrant et en fermant le contact et d'autre part à un (premier) dispositif d'entraînement (197) qui ouvre la voie de contact (193) lorsqu'une surcharge intervient dans le circuit et qui ne peut être ramené à la position de départ qu'à la main au moyen d'un crantage (198 ; 203),
c) qu'un détecteur de conduction de courant (132, 133, 134, 137, 143, 151) est couplé pour les consommateurs de courant triphasé dans chaque conduite de phase (R, S, T), détecteur dont les signaux réunis forment le signal de somme qui et dépendant de la puissance apparente amenée et de la puissance effective amenée et les commutateurs (120, 121, 122) placés dans chacune des trois conduites étant ouverts ou fermés simultanément,
d) que le programme pour l'unité de traitement (130) fournit un étage de programme (171) dont le réglage peut être effectué au moyen d'un dispositif de lecture (175) qui peut être commandé par une carte magnétique (176).

2. Dispositif selon la revendication 1,
**caractérisé en ce**
que pour un tarif qui se base sur la consommation totale d'énergie (EV) dans une certaine période de temps (TP) constituée par un certain nombre (N) d'intervalles (Z) d'une largeur d'intervalle (TI) et qui est donc dépendant de la puissance, la valeur limite (GW) pour un intervalle suivant (Z) est déterminée à partir de la valeur de consommation d'énergie (E1, E2...) dans au moins un intervalle écoulé (Z) au moyen de l'unité de traitement (130) selon un programme prédéfini.

3. Dispositif selon la revendication 2,
**caractérisé en ce**
que la consommation totale d'énergie (EV) dans une période de temps d'une durée fixée doit correspondre à une valeur de consigne d'énergie donnee (EP) et ne doit pas la dépasser,
que la période de temps (TP) est divisée en N intervalles (Z), de préférence de même grandeur, de la largeur (TI), (Z) désignant le numéro de l'intervalle qui monte continuellement avec le temps (t) d'intervalle à intervalle,
que la consommation d'énergie (EZ) est mesurée dans chaque intervalle (Z) et est totalisée pendant les derniers (N-1) intervalles en une valeur de somme (ES) qui est retirée de la valeur de consigne d'énergie (EP) pour toute la période de temps (TP) et qu'une valeur de différence DE = (EP - ES) est formée avec laquelle la valeur limite (GW) est déterminée dans le N-ième intervalle qui suit.

4. Dispositif selon l'une des revendications précédentes,
**caractérisé en ce**
que l'énergie consommée à partir du début du (N-ième) intervalle qui suit est mesurée en continu et la valeur limite correspondante (GW) est modifiée en décroissant selon l'énergie qui peut être encore consommée jusqu'à la fin du (N-ième) intervalle.

5. Dispositif selon la revendication 4,
**caractérisé en ce**
que la valeur limite (GW) est modifée en décroissant en plusieurs degrés par exemple d'une durée de tout d'abord 15 et à la fin 5 minutes.

6. Dispositif selon l'une des revendications 1 à 5,
**caractérisé en ce**
que l'énergie consommée à partir du début du (N-ième) intervalle qui suit est mesurée en continu et que la valeur limite n'est rendue efficace que lorsque l'on s'approche de la valeur de consigne d'énergie (EP) et, si nécessaire, la puissance absorbée (L ; courbe 105) est réduite automatiquement au moyen des commutateurs qui peuvent être commandés.

7. Dispositif selon la revendication 1 à 5,
**caractérisé en ce**
que l'énergie consommée à partir du début d'un (N-ième) intervalle qui suit est mesurée en continu et que, si besoin est, lorsque l'on s'approche d'une courbe de valeur limite de consommation minimale qui est à la fin du (N-ième) intervalle vers la valeur de consigne d'énergie (EP), la puissance absorbée (L ; courbe 105) est automatiquement réduite au moyen des commutateurs qui peuvent être commandés.

8. Dispositif selon l'une des revendications précédentes,
**caractérisé en ce**
que, dans le cas du dépassement de la valeur limite (GW) par la consommation momentanée d'énergie (LZ), au moins la consommation de l'un des appareils branchés (110, 111, 112, 241, 147, 148, 152) est réduite selon un ordre défini ou l'appareil est partiellement ou totalement mis hors circuit ou est mis en circuit partiellement ou totalement dans le cas où la valeur limite (GW) n'est pas atteinte de plus d'une valeur de seuil prédéfinie (SW).

9. Dispositif selon la revendication 8,
**caractérisé en ce**
que, lorsque la valeur limite (GW) n'est pas atteinte, tout d'abord au moins un appareil consommateur (241, 147, 148), dont la consommation avait été réduite ou qui avait été mis hors circuit lors d'une mise hors circuit précédente, est mis en circuit à nouveau.

10. Dispositif selon la revendication 9,
**caractérisé en ce**
qu'au moins l'un des appareils consommateurs (141, 147, 148) est mis en circuit et hors circuit périodiquement dans des intervalles d'une durée de, par exemple, quelques secondes ou minutes.

11. Dispositif selon la revendication 9,
**caractérisé en ce**
qu'au moins l'un des appareils consommateurs (152) est mis en circuit et hors circuit en étant commandé par coupe dans chaque période de courant alternatif.

12. Dispositif selon la revendication 9, 10 ou 11,
**caractérisé en ce**
que la valeur de seuil (SW) pour la mise en circuit des consommateurs correspond à une absorption d'énergie d'un certain pourcentage, par exemple d'1 à 3 % de la puissance de la valeur limite.

13. Dispositif selon l'une des revendications précédentes,
**caractérisé en ce**
que la voie de contact (193) du commutateur qui peut être commandé (120, 121, 122) selon la valeur limite (GW) représente un contact de repos.

14. Dispositif selon l'une des revendications précédentes,
**caractérisé en ce**
que les signaux de conduction de courant sont amenés à l'unité de traitement (130) par des convertisseurs analogiques-numériques.

15. Dispositif selon la revendication 14,
**caractérisé en ce**
que les convertisseurs analogiques-numériques sont contenus dans l'étage d'entrée (159).

16. Dispositif selon l'une des revendications précédentes 1 à 14,
**caractérisé en ce**
que les convertisseurs analogiques-numériques sont installés à proximité des détecteurs de conduction de courant (132, 133, 134).

17. Dispositif selon l'une des revendications précédentes,
**caractérisé en ce**
que l'unité de traitement (130), l'étage de programme (171), l'étage d'entrée (159), l'étage de sortie (129) et/ou l'étage de valeur limite (162) ainsi que, le cas échéant, d'autres étages nécessaires comme la mémoire et des circuits d'alimentation sont réunis dans un appareil de commande (104).

18. Dispositif selon la revendication 17,
**caractérisé en ce**
que les jonctions des détecteurs de conduction de courant (132, 133, 134) à l'étage d'entrée (159) sont réalisées par des câbles flexibles, de préférence avec un raccord à fiche.

19. Dispositif selon l'une des revendications précédentes,
**caractérisé en ce**
que la jonction de l'unité de sortie (129) vers les dispositifs d'entraînement (127) des commutateurs qui peuvent être commandés (120, 121, 122) est réalisée par des câbles flexibles, de préférence avec un raccord à fiche.

20. Dispositif selon l'une des revendications précédentes,
**caractérisé en ce**
que l'étage de programme (171) qui fournit le programme pour l'unité de traitement (130) peut être réglé après coup.

21. Dispositif selon la revendication 20,
**caractérisé en ce**
que le réglage peut être effectué au moyen d'un clavier (174).

22. Dispositif selon l'une des revendications précédentes,
**caractérisé en ce**
que la priorité ou non de l'actionnement des commutateurs peut être modifiée après coup.

23. Dispositif selon l'une des revendications précédentes,
**caractérisé en ce**
que le commutateur qui peut être commandé peut être actionné électroniquement, par exemple comme un thyristor (153).

24. Dispositif selon l'une des revendications précédentes,
**caractérisé en ce**
que différents consommateurs (241, 147, 148) peuvent être mis en circuit ou hors circuit périodiquement.

25. Dispositif selon l'une des revendications précédentes,
**caractérisé en ce**
que des verrouillages de mise en circuit peuvent être effectués entre nimporte quels appareils consommateurs.

26. Dispositif selon l'une des revendications précédentes,
**caractérisé en ce**
que l'état de commutation d'au moins un commutateur (141, 146) est affiché optiquement.

27. Dispositif selon la revendication 26,
**caractérisé en ce**
qu'une surface de visualisation (187) est installée en particulier sur l'appareil de commande (104).

28. Dispositif selon la revendication 26 ou 27,
**caractérisé en ce**
que les états de commutation "conducteur de courant", "prêt à la conduction de courant", "pas prêt à la conduction de courant" sont affichés.

29. Dispositif selon l'une des revendications 26, 27 ou 28,
**caractérisé en ce**
qu'une surface de visualisation est installée sur au moins l'un des appareils consommateurs (241, 147, 148).

30. Dispositif selon l'une des revendications précédentes,
**caractérisé en ce**
qu'au moins un signal de temps d'heure, un signal de jour de semaine et/ou un signal de saison peut être amené à l'unité de traitement (130).

31. Dispositif selon l'une des revendications précédentes,
**caractérisé en ce**
qu'au moins un signal peut être amené de l'extérieur, de préférence par optocoupleur à l'unité de traitement (130).

32. Dispositif selon la revendication 31,
**caractérisé en ce**
que des signaux de commande externes, par exemple pour le réglage du compteur, des impulsions de télécommande centralisée ou équivalent peuvent être amenés par l'entreprise d'électricité.

33. Dispositif selon l'une des revendications précédentes,
**caractérisé en ce**
qu'un compteur d'électricité (184) est raccordé à l'unité de traitement (130).

34. Dispositif selon l'une des revendications précédentes,
**caractérisé en ce**
que toutes les parties du dispositif sont installées ensemble sur un panneau de distribution.

35. Dispositif selon l'une des revendications precédentes,
**caractérisé en ce**
que les parties du dispositif sont blindées les unes par rapport aux autres.

36. Dispositif selon l'une des revendications précédentes,
**caractérisé en ce**
qu'un détecteur de conduction de courant (par exemple 137) et un commutateur qui peut être commandé (par exemple 141) sont installés sur le panneau de distribution et que les autres parties du dispositif sont cependant placées éloignées, par exemple dans un appareil de commande (140).

37. Dispositif selon l'une des revendications précédentes,
**caractérisé en ce**
que la valeur de consigne admissible (SW) peut être modifiée, de préférence augmentée, par le récepteur d'électricité pour une durée limitée.

38. Dispositif selon l'une des revendications précédentes,
**caractérisé en ce**
qu'un contrôleur de maximum, le cas échéant un contrôleur enregistreur, est monté sur l'étage de traitement.
